(19) **Europäisches Patentamt / European Patent Office / Office européen des brevets**

(11) **EP 1 297 042 B1**

(12) **EUROPEAN PATENT SPECIFICATION**

(45) Date of publication and mention
of the grant of the patent:
**25.03.2009 Bulletin 2009/13**

(51) Int Cl.:
**C08G 18/08** *(2006.01)*    **C08G 18/62** *(2006.01)*
**C09D 175/04** *(2006.01)*    **C08G 18/72** *(2006.01)*
**C08G 18/80** *(2006.01)*

(21) Application number: **01934174.2**

(22) Date of filing: **31.05.2001**

(86) International application number:
**PCT/GB2001/002420**

(87) International publication number:
**WO 2001/098390 (27.12.2001 Gazette 2001/52)**

(54) **AQUEOUS COATING COMPOSITION**

WÄSSRIGE BESCHICHTUNGSZUSAMMENSETZUNG

COMPOSITION DE REVETEMENT AQUEUSE

(84) Designated Contracting States:
**DE ES FR GB IT**

(30) Priority: **21.06.2000 GB 0015027**

(43) Date of publication of application:
**02.04.2003 Bulletin 2003/14**

(73) Proprietor: **PPG Industries Ohio, Inc.
Cleveland, OH 44111 (US)**

(72) Inventors:
• **FENN, David, Robert
Allison Park, PA 15101 (US)**
• **FRENCH, Andrew
Maidenhead,
Berkshire SL6 6RX (GB)**

(74) Representative: **Fleischer, Holm Herbert
polypatent
Postfach 40 02 43
51410 Bergisch Gladbach (DE)**

(56) References cited:
**EP-A- 0 663 413**        **US-A- 5 051 464**
**US-A- 5 688 859**        **US-A- 6 005 045**

**Description**

This invention relates to a three component coating composition containing an acrylic polyol having an acid value, a base, a crosslinker and water. It also relates to a process for producing the coating composition, to a process of coating using the composition and to a coated substrate obtainable by the coating process.

Coating compositions that comprise hydroxy functional polymers and a polyisocyanate compound have been known for some years. These traditionally comprise a hydroxyl functional acrylic copolymer together with a polyisocyanate compound in solution in an organic solvent. The isocyanate groups on the polyisocyanate react with the hydroxyl groups on the acrylic polymer so as to form a crosslinked film. Such reaction takes place at room temperature or at moderately elevated temperatures.

Due to environmental considerations there is a general trend in the coatings industry towards coating compositions with reduced organic solvent content. Coatings with a lower organic solvent content emit lower levels of solvent when they are used and so are less polluting of the atmosphere.

One way to achieve a lower solvent content is to use waterborne compositions. One method of incorporating acrylic addition polymers into water is to make them carboxyl (-COOH) functional by the incorporation of some carboxyl functional ethylenically unsaturated monomer such as acrylic acid during their manufacture, and neutralising at least some of the carboxyl groups in the aqueous composition by adding a base such as alkali metal hydroxide, ammonia or an amine. The resulting neutralised carboxyl groups stabilise the polymer in dispersion in water.

US 5 075 370 describes a two component composition consisting of an aqueous solution or dispersion of an acrylic polyol and a polyisocyanate. The acrylic polyol contains chemically incorporated carboxylate or sulphonate groups. The polyisocyanate is emulsified in the aqueous solution or dispersion of the acrylic copolymer. The compositions contain relatively high levels of neutralised carboxyl groups.

EP 557 844 also describes a two component composition consisting of an aqueous dispersion of an acrylic polyol and a polyisocyanate. Once again the polyisocyanate is emulsified in the aqueous solution or dispersion of the acrylic copolymer. The acrylic copolymer has a low acid value in the range 0 to 7 mg KOH/g and a total content of sulphonate and carboxylate groups of 0 to 4.5 milliequivalents per 100 g of solid resin. However the system can be dispersed into water primarily because of the presence of anionic and/or non-ionic emulsifiers. Additionally the polyisocyanate has an ethylene oxide content of 2 to 20% within polyether chains.

An alternative approach is described in EP 663 413 which describes a coating composition obtained by emulsifying a homogeneous mixture of a polyisocyanate and an isocyanate reactive surface-active material in water. However isocyanate reactive surface-active material has a relatively high carboxyl group content and the composition contains relatively high levels of base.

A problem which we have discovered is that in practice dilution with water to achieve suitable viscosities for application can result in a solids content that is too low to achieve adequate film build per coat. For spray application a solids content of 35-60% is preferred.

A further problem is that these compositions posses inferior water and humidity resistance in comparison to their solvent borne counterparts. This is particularly the case when they are used in conjunction with other waterborne compositions in multilayer systems. One cause for the inferior water resistance may be the presence of hydrophilic components necessary to allow the compositions to be carried in water. The use of carboxyl functional monomers at relatively high levels, together with the associated neutralising amine, may lead to poor water resistance when these polymers are made into coating compositions. EP 557 844 uses acrylic polyols with low acid values but in practice other emulsifiers are used during their preparation. The polyisocyanate is also required to contain hydrophilic polyethylene oxide chains to assist with dispersion into water. The presence of additional emulsifiers and polyethylene oxide will adversely affect the humidity resistance of the coating composition.

The invention relates to the use of low levels of base neutralized acid groups in the polyol and we have found that we can produce waterborne two pack polyurethane coating compositions that contain low levels of base neutralised carboxylic acid groups, and that these compositions have high solids at application viscosity and exhibit improved water and humidity resistance compared to prior art systems.

According to the present invention there is provided a three component coating composition comprising;

(i) a first component containing at least one acrylic polyol having a carboxyl group content of 0.035 to 2.0 moles/kg, said acrylic polyol being dissolved in a volatile organic solvent,

(ii) a second component containing at least one polyisocyanate, and

(iii) a third component containing water,

at least one of said components also including a base, the base being present in an amount capable of neutralising 0.035 to 0.2 moles of carboxyl groups per kilogram of polyol,

the composition being free from other hydrophilizing groups or components.

Where reference is made to the base being present in an amount capable of neutralising 0.035 to 0.2 moles of carboxyl groups per kilogram of polyol, it is to be understood that the polyol includes the acrylic polyol referred to together with any other polyol present in the compositions.

By "free from other hydrophilizing groups or components" as used throughout this specification (including the claims) we mean that the base neutralised carboxy groups are are solely responsible for allowing the system to be dispersed in water.

The acrylic polyol having a carboxyl group content of 0.035 to 2.0 moles/kg is derived from polymerisable ethylenically unsaturated monomers such as alkyl esters of (meth) acrylic acid and vinyl monomers.

When used herein, the term acrylic monomer refers to acrylic or methacrylic acid or their esters. The term (meth)acrylate refers to both the acrylate and methacrylate equally and the term (meth)acrylic acid refers to acrylic or methacrylic acid equally.

Examples of suitable alkyl esters of (meth)acrylic acid are $C_{1-12}$ alkyl esters such as methyl (meth)acrylate, ethyl (meth)acrylate, n-butyl (meth)acrylate, t-butyl (meth)acrylate, n-propyl (meth)acrylate, 2-ethyl hexyl (meth)acrylate, isobornyl (meth)acrylate and lauryl (meth)acrylate. Examples of vinyl monomers are styrene and alpha-methyl styrene.

Optionally chain transfer agents can be utilised. Chain transfer agents are compounds that are used in the manufacture of acrylic addition polymers to control their molecular weight. Examples of known chain transfer agents include mercapto compounds. Examples of mercapto compounds that can be used include octyl mercaptan, dodecyl mercaptan and pentaerythritol tetra(3-mercaptopropionate).

The carboxyl group content can be derived from unsaturated monomers having carboxyl groups and/or initiators having carboxyl groups. Examples of monomers having carboxyl groups are acrylic acid, methacrylic acid and beta-carboxyethyl acrylate. Examples of chain transfer agents having carboxyl groups are mercaptoacetic acid, 3-mercaptopropionic acid and 2-mercaptopropionic acid. An example of an initiator having a carboxyl group is 4,4'-azobis(4-cyanoverlaric acid). It is also possible to produce carboxyl groups by modifying the polymer. For example hydroxyl functional groups can be reacted with cyclic anhydrides such as phthalic anhydride or hexhhydraphthalic anhydride. Preferably the carboxyl groups are derived from (meth)acrylic acid and/or 3-mercaptopropionic acid.

The acrylic polyol has a carboxyl group content of 0.035 to 2.0 mol/kg. Preferably the carboxyl group content is 0.035 to 1.0 mol/kg, more preferably 0.035 to 0.20 mol/kg, even more preferably about 0.09 mol/kg.

The hydroxyl groups can be derived from vinyl and/or acrylic monomers having hydroxyl groups and from chain transfer agents having hydroxyl groups. An example of a vinyl monomer having hydroxyl groups is vinyl alcohol. Examples of acrylic monomers having hydroxyl groups are hydroxyethyl (meth)acrylate, hydroxypropyl (meth)acrylate and 4-hydroxybutyl (meth)acrylate. An example of a chain transfer agent having hydroxyl groups is mercaptoethanol.

Other examples of suitable acrylic monomers having hydroxyl groups are the reaction products of glycidyl (meth)acrylate with mono-carboxylic acids, such as versatic acid and the reaction product of (meth)acrylic acid with monoepoxy compounds such as Cardura E (the glycidyl ester of versatic acid; trade mark of Shell).

Preferably the acrylic polyol has a hydroxyl value of 5 to 500 mgKOH/g of acrylic polyol, more preferably 50 to 250.

The acrylic polyol can contain other functional groups that may take part in chemical reactions during the application and cure of the coating composition. Such functional units can be derived from monomers which carry reactive groups other than hydroxyl groups or carboxyl groups, such as acetoacetate groups and epoxy groups. An example of a monomer carrying an acetoacetate group is aceotacetoxyethyl (meth) acrylate. An example of a monomer carrying an epoxy group is glycidyl (meth) acrylate.

Preferred acrylic polyols having carboxyl group content have a number average molecular weight as measured by gel permeation chromatography of 700 to 10 000, more preferably 1 000 to 6 000, most preferably 1 500 to 5 000.

Preferred acrylic polyols have a theoretical glass transition temperature (Fox Tg) of -30 to 100 °C, more preferably -10 to 70 °C.

The acrylic polyol can be produced by conventional means. For example, in general it can be produced by contacting a mixture of the appropriate monomers including the chain transfer agent with a polymerisation initiator at a temperature at which polymerisation occurs.

The process for preparing the acrylic polyol can be carried out in volatile organic solvent. For example, the initiator can be fed into the solvent at the polymerisation temperature simultaneously with the monomer mixture. The volatile organic solvent can be any solvent which will dissolve the acrylic polyol. It can be an aliphatic or aromatic hydrocarbon such as Solvesso 100 (trademark), toluene or xylene, an alcohol such as butanol or isoproponal, an ester such as butyl acetate or hexyl acetate, a ketone such as methyl isobutyl ketone, methyl ethyl ketone or methyl amyl ketone, an ether, an ether-alcohol or an ether-ester or a mixture of any of these. Preferred solvents are esters and ketones. Particularly preferred solvents are butyl acetate, methyl n-amyl ketone and methyl iso-amyl ketone.

Typical polymerisation temperatures are 50 to 150°C. Initiators can include for example typical free radical types such as hydrogen peroxide, t-butyl hydroperoxide, dit-butyl peroxide, di-t-amyl peroxide, butylperoxy-2-ethyl hexanoate, benzoyl peroxide, 2,4-dichlorbenzoyl peroxide, t-butylperacetate and 2,2' azobis (2-methylbutyronitrile). Polymerisation initiators are usually added in amounts between about 0.1 and 6% by weight of the monomers polymerised, preferably between 0.5 and 5%.

The compositions of the invention also comprise a base which at least partially neutralises the carboxyl groups on the addition polymer. Ammonia or an amine or mixtures thereof are the preferred bases, while alkali metal hydroxide bases are useful but less preferred. Examples of suitable amines are dimethylethanol amine, 2-amino-2-methyl-1-propanol and triethylamine. The amount of base present is such as to be capable of neutralising 0.035 to 0.2 moles of carboxyl groups per kilogram of polyol, preferably 0.035 to 0.15 moles, more preferably 0.06 to 0.09 moles.

The compositions are free from other hydrophilizing groups or compounds. Hydrophilizing groups and compounds are well known and are used to disperse otherwise hydrophobic compositions in aqueous media.

Hydrophilizing compounds include emulsifiers commonly used, for example, in emulsion polymerisations. Emulsifiers include anionic emulsifiers and nonionic emulsifiers. Examples of anionic emulsifiers include sodium lauryl sulphate, sodium dioctyl sulpohsuccinate, disodium octadecyl sulphosuccinamate and the ammonium salt of a sulphate ester of a condensate of nonyl phenol and ethylene oxide. Examples of nonionic emulsifiers include the reaction products of ethylene oxide with long chain alcohols such as stearyl alcohol or lauryl alcohol, the reaction products of ethylene oxide with fatty acids and the poly(ethylene glycol) ether ofnonyl phenol.

Hydrophilizing groups include groups capable of generating anions upon neutralisation, such as phosphoric groups, groups capable of generating cations upon neutralization, such as amino groups, and hydrophilic non-ionic groups such as polyether chains formed from ethylene oxide.

When the acrylic polyol has been prepared in organic solvent, some or all of this can be removed, for example by distillation, before or after the polyol is combined with any other constituents of the first component. However, it is preferably that the type and level of organic solvents used during the preparation of the acrylic polyol are chosen such that they can remain as a constituent of the first component The first component can contain additional volatile organic solvent This can be any solvent which will dissolve the acrylic polyol. It can be an aliphatic or aromatic hydrocarbon such as Solvesso 100 (trademark), toluene or xylene, an alcohol such as butanol or isoproponal, an ester such as butyl acetate or hexyl acetate, a ketone such as methyl isobutyl ketone, methyl ethyl ketone or methyl amyl ketone, an ether, an ether-alcohol or an ether-ester or a mixture of any of these. Particularly preferred solvents are butyl acetate, methyl n-amyl ketone and methyl iso-amyl ketone.

The first component can contain water but the water must remain in solution or must be dispersed in the form of a water in oil emulsion. The first component must not be in the form of an oil in water emulsion. Preferably the first component contains substantially no water.

So far as the second component is concerned, polyisocyanates are also well known in the coatings art. Polyisocyanates are compounds having two or more isocyanate groups per molecule. Suitable polyisocyanates are aliphatic or aromatic polyisocyanates. Examples of suitable aliphatic diisocyanates are hexamethylene diisocyanate and isophorone diisocyanate. Examples of suitable aromatic diisocyanates are toluene diisocyanate and 4,4'-diphenylmethane diisocyanate.

Other suitable polyisocyanates include the isocyanurate trimers, allophanates and uretdiones of diisocyanates such as those described above as well as the reaction products of these diisocyanates with polyols. Polyols are compounds having three or more hydroxyl groups. Suitable polyols include trimethylol propane, glycerol and pentaerythritol.

Preferably the polyisocyanate contains more than 2 isocyanate groups per molocule. Many such polyisocyanates are commercially available, for example under the Desmodur trade mark from Bayer and under the Tolonate trade mark from Rhone Poulenc. Preferred polyisocyanates are isocyanurate trimers of hexamethylene diisocyanate and the reaction product of trimethylol propane and 4,4'-diphenylmethane diisocyanate available as Cythane 3174 from Cytec Industries.

Polyisocyanate crosslinkers are preferably used in an amount such that the ratio of isocyanate groups to hydroxyl groups is in the range 0.8:1 to 2:1.

In addition to the polyisocyanate, the second component can contain volatile organic solvent. This can be any solvent free from functional groups that will react with the isocyanate groups and which will dissolve the polyisocyanate. It can be an aliphatic or aromatic hydrocarbon such as Solvesso 100 (trademark), toluene or xylene, an ester such as butyl acetate or hexyl acetate, a ketone such as methyl isobutyl ketone, methyl ethyl ketone or methyl amyl ketone, an ether, an ether-ester or a mixture of any of these. Particularly preferred solvents are butyl acetate, methyl n-amyl ketone and methyl iso-amyl ketone.

Preferably the third component contains at least 60% by weight water, more preferably at least 80% even more preferably at least 90%.

The compositions can also contain catalysts for the isocyanate-hydroxyl reaction. Suitable catalysts include tin catalysts such as dibutyl tin dilaurate.

The compositions can also contain other conventional paint additives such as reactive diluents, pigments, fillers, UV absorbers, rheology control agents and flow aids.

Preferably the coating composition has a total volatile organic solvent content (VOC) of 420 g/l or less, more preferably about 250 g/l. The VOC can be calculated using the following equation

$$\text{VOC} = 1000 \times (100 - W_{NVM} - W_W) \times D_c \, /((100 - (W_W \times D_c/D_W))$$

where

$W_{NVM}$ is the mass in grams of non volatile material present in 100 g of coating composition.

$W_W$ is the mass in grams of water present in 100 g of coating composition.

$D_c$ is the density in g/cm$^3$ of the coating composition at 23 °C

$D_W$ is the density in g/cm$^3$ of the water at 23 °C

The compositions can also comprise one or more additional polymers such as film forming polymers having hydroxyl groups. Examples of additional film forming polymers having hydroxyl groups are polyester polyols and polyurethane polyols. Preferably any additional polymers contain carboxyl groups. Preferably any additional polymer or polymers have a carboxyl group content of 0.035 to 2.0 mol/kg, more preferably the 0.035 to 1.0 mol/kg, even more preferably 0.035 to 0.20 mol/kg, most preferably about 0.09 mol/kg.

Preferably any additional polymeric components are incorporated in component 1 or component 3, more preferably in component 1.

Preferably the polymeric components of the composition, excluding any crosslinkers, are made up of at least 60% by weight of acrylic polyol having carboxyl group content of 0.035 to 0.02 mol/kg.

The coating composition of the invention can be applied as a layer to the surface of a substrate and then allowed or caused to dry and cure. According to the present invention there is provided a process for coating a substrate which comprises the steps of applying a layer of a coating composition according to the present invention to a surface of the substrate and thereafter causing or allowing the layer to cure.

The compositions are particularly useful as vehicle refinish primers or topcoats. Primers are somewhat heavily pigmented compositions which are applied over the bare substrate or over the pre-existing coating before the new topcoat is applied. Topcoats are the final coating applied to give the vehicle its colour and gloss as well as providing protection from the elements and physical damage.

The coating compositions are prepared by mixing the first component, second component and third component shortly before application. Preferably the first component is mixed with the second component, creating a homogeneous solution of polyol and polyisocyanate, before mixing with the third component to create an aqueous dispersion. Mixing can be carried out by simple stirring, for example with a pallet knife, or by mechanical means.

The coating composition can be applied by conventional means such as brushing, rollercoating or spraying, preferably by spraying.

The applied layer can be allowed to cure at ambient temperature. Alternatively the layer can be baked at elevated temperatures, for example 50-130°C.

According to the present invention there is also provided a coated article obtainable by the process.

The invention will now be illustrated by means of the following examples.

In the examples the following abbreviations are used:-

AA       acrylic acid

AMS      alpha-methylstyrene

AV       acid value (mg KOH/gNV)

BA       butyl acrylate

Cythane 33174 adduct of 1,3-bis isocyanate 1-methylethyl) benzene (TMXDI) and 2-ethyl-2- (hydroxymethyl)-1,3 propanediol (trimethyl propane) available from Cytec.

DMAE     N,N-dimethylethanolamine

HBA      4-hydroxybutyl acrylate

HTD LV    isocyanurate trimer of 1,6-diisocyanatohexane available from Rhodia

MiAK    methyl isoamyl ketone

Mma    methyl methacrylate

MPA    3-mercaptopropionic acid

POM    1-octanethiol

TBA    t-butyl acrylate

Vazo 67    polymerisation initiator available from DuPont

St    Styrene

NV    non-volatiles

Byk 346    a polyether modified polymethylsiloxane available from Byk Chemie

HeMa    hydroxyethyl methacrylate

IboMa    isobornyl methacrylate

Lma    lauryl methacrylate

### Synthesis of Acrylic polyols 1-7

The formulations of the acrylic polyols used in this work are given in Table 1. They were all synthesised using the following procedure.

The charge was heated to reflux (approximately 140°C) in a reaction vessel fitted with stirrer, heating mantle, water condenser and nitrogen blanket. The charge was held at reflux and stirred whilst the feed mixture was fed into the reaction vessel at a uniform rate over 180 minutes. The mixture was stirred for a further 15 minutes. Initiator shot 1 was added over 10 minutes, the mixture stirred for one hour. Initiator shot 2 was added over 10 minutes, the mixture was stirred for a further one hour and then allowed to cool.

### Examples I to XVII

The formulations given in table 3 were prepared and tested as follows:-

The polymer solution and DMAE were mixed thoroughly in the proportions shown in Table 3. The polymer numbers correspond to the polymers of Table 1. The iscocyanate was then added whilst stirring until homogeneous. Demineralised water was then slowly added whist the mixture was stirred with a spatula. The mass of water required to reduce the viscosity of the mixture to between 25 and 30 seconds in a DIN 4 flow cup was recorded. The results are shown in Table 4.

### Synthesis of acrylic polyol 8

Butyl acetate (998.8g) was heated to reflux (approximately 130°C) in a reaction vessel fitted with stirrer, heating mantle, water condenser and nitrogen blanket. Reflux was maintained whilst a homogeneous mixture of styrene (932.7g), lauryl methacrylate (711.7g), 4-hydroxybutyl acrylate (669.6g), acrylic acid (14.9g), 1-octanethiol (69.9g) and Vazo 67 (102.5g) was fed into the reaction vessel at a uniform rate over 180 minutes. The mixture was stirred for a further 15 minutes. Triganox 21 S (5.1 g) was added over 10 minutes and the mixture stirred for one hour. Further Triganox 21 S (5.1 g) was added over 10 minutes, the mixture was stirred for a further one hour and then allowed to cool.

Table 1

| Acrylic polyols - formulations | | | | | | | | | | | | | | | | |
| Polymer | charge m(g). | | | | | Feed Monomer (G) | | | | | | Initiator (g) | | Chain transfer agent (g) | Initiator Spikes (T215) (g) | |
| | | St | Lma | IboMa | AMS | BA | tBA | HBA | AA | HEMa | Vazo 67 | POM | | MPA | 1 | 2 |
| | MIAK | | | | | | | | | | | | | | | |
| 1 | 861.4 | | | | 426.71 | 375.32 | 603.61 | 573.73 | 12.75 | | 69.72 | 69.53 | | | 3.5 | 3.5 |
| 2 | 864.8 | | | | 429.65 | 377.90 | 607.77 | 577.68 | 12.84 | | 70.20 | 17.25 | | 38.31 | 3.5 | 3.5 |
| 3 | 861.4 | | | | 406.36 | 366.12 | 609.53 | 585.39 | 38.42 | | 70.20 | 17.25 | | 38.31 | 3.5 | 3.5 |
| 4 | 861.7 | | | | 426.71 | 375.32 | 603.61 | | 12.75 | 573.73 | 69.72 | 69.53 | | | 3.5 | 3.5 |
| 5 | 861.4 | | | | 406.38 | 366.06 | 609.57 | | 38.51 | 585.30 | 70.20 | 17.25 | | 38.31 | 3.5 | 3.5 |
| 6 | 861.7 | 99.61 | 682.10 | 225.51 | 398.43 | | | 573.73 | 12.75 | | 69.72 | 69.53 | | | 3.5 | 3.5 |
| 7 | 861.4 | 100.29 | 681.98 | 206.00 | 401.17 | | | 577.68 | 38.71 | | 70.20 | 17.25 | | 38.31 | 3.5 | 3.5 |

The compositions and molecular weights of the acrylic polyols are shown in Table 2

Table 2

| Acrylic polyols - composition and molecular weight | | | | | | | | | | | | | |
| Polymer | Monomer composition (% by weight) | | | | | | | | | Carboxyl group content* | Molecular weight | | |
| | | | | | | | | | | | Mn | | Mw |
| | St | Lma | iBoMa | AMS | BA | tBA | HBA | AA | HEMa | | | | |
| 1 | | | | 21.42 | 18.84 | 30.3 | 28.8 | 0.64 | | 0.089 | | 1700 | 4100 |
| 2 | | | | 21.42 | 18.84 | 30.3 | 28.8 | 0.64 | | 0.267 | | 2500 | 5500 |
| 3 | | | | 20.2 | 18.2 | 30.3 | 29.1 | 1.91 | | 0.446 | | 2100 | 5700 |
| 4 | | | | 21.42 | 18.84 | 30.3 | | 0.64 | 28.8 | 0.089 | | 1700 | 3800 |
| 5 | | | | 20.26 | 18.25 | 30.39 | | 1.92 | 29.18 | 0.446 | | 1800 | 4300 |
| 6 | 5.00 | 34.24 | 11.32 | 20.00 | | | 28.8 | 1.93 | | 0.089 | | 1800 | 4100 |
| 7 | 5.00 | 34.00 | 10.27 | 20.00 | | | 28.8 | 1.93 | | 0.446 | | 2300 | 6100 |
| * Number of moles of carboxyl groups per kilogram of acrlyic polyol | | | | | | | | | | | | | |

**Table 3**

| formulations | | | | | |
|---|---|---|---|---|---|
| Example | Polyol number | Mass (g) polyol | DMAE (g) | ISO (g) | Base Content* ** |
| I | 1 | 100 | 0.42 | 53.43 * | 0.067 |
| II | 2 | 100 | 1.25 | 53.43* | 0.200 |
| III† | 3 | 100 | 2.09 | 53.43* | 0.335 |
| IV | 4 | 100 | 0.42 | 26.17** | 0.067 |
| V† | 5 | 100 | 2.09 | 26.17** | 0.335 |
| VI | 6 | 100 | 0.42 | 53.43* | 0.067 |
| VII† | 7 | 100 | 2.09 | 53.43* | 0.335 |
| † comparative Examples<br>* ISO is a mixture of 80% by weight Cythane 3174 and 20% by weight HDT LV<br>** ISO is HDT LV<br>*** Number of moles of acid groups per kilogram of polyol that could be neturalised by the base | | | | | |

Table 4 - results

| Example | AV | Water required (g) | DIN 4 viscosity | Solids content (%) |
|---|---|---|---|---|
| I | 5 | 85.35 | 30 | 46.36 |
| II | 15 | 287.58 | 27 | 25.08 |
| III | 25 | 553.97 | 28 | 15.63 |
| IV | 5 | 60.02 | 30 | 51.53 |
| V | 25 | 181.48 | 26 | 41.39 |
| VI | 5 | 90.2 | 27 | 45.44 |
| VII | 25 | 429.16 | 28 | 18.97 |

Example VIII

A cold rolled steel test panel was sanded with P180 sandpaper and solvent wiped with white spirit. The panel was then coated with 20-25 microns of chromate free etch primer P565-713 (available from ICI Autocolor, used as instructed on the product data sheet), followed by 100 microns of Hidur Rapide undercoat P565-693 (available from ICI Autocolor, used as instructed on the product data sheet). 100 parts by weight of Aquabase medium coarse aluminium basic P968-9987 was mixed with 10.3 parts by weight of Aquabase activator P935-2018 and 3 parts by weight of Aquabase thinner P275-366 (all available from ICI Autocolor). This was spray applied to the panel to give a film build of 12-15 microns. The panel was then coated with the clearcoat composition given below.

| | |
|---|---|
| Acrylic polyol solution 8 | 70g |
| DBTDL solution* | 0.6g |
| Byk 346** | 0.49g |
| RM8*** | 2.0g |
| DMAE | 0.38g |

(continued)

| Polyisocyanate **** | 37.4g |
| --- | --- |

\* solution of DBTDL (2% by weight) in butyl acetate
\*\* a polyether modified polymethylsiloxane available from Byk Chemie
\*\*\* 11% by weight Acrysol TM-8W (a rheology modifier available from Rohm and Haas) in demineralised water.
\*\*\*\* a mixture of 80% by weight Cythane 3174 and 20% by weight HDT LV

The clearcoat composition was prepared by first mixing all of the ingredients except the polyisocyanate until homogeneous. The polyisocyanate was added with stirring to give a homogeneous mixture. Demineralised water was then added slowly to the mixture whilst it was stirred with a spatula. The mass of water required to reduce the viscosity of system to between 25 and 30 seconds in a DIN 4 flow cup was recorded. 25g of water was required giving a solids content of 58%. The clearcoat was spray applied to give a film build of about 60 microns. After application the coated panel was left at room temperature for thirty minutes before being low-baked at 60°C for thirty minutes.

One week after application, the panel was immersed in demineralised water at a temperature of 38°C for ten days. The panel was inspected for signals of blistering or other defects every two days. No blisters or defects were evident.

**Claims**

1.   A three component coating composition comprising

    (i) a first component containing at least one acrylic polyol having at carboxyl group content of 0.035 to 2.0 moles/kg, said acrylic polyol being dissolved in volatile organic solvent,
    (ii) a second component containing a polyisocyanate, and
    (iii) a third component containing water,

    at least one of said components also including a base, the base being present in an amount capable of neutralizing 0.035 to 0.2 moles of carboxyl groups per kilogram of polyol,
    the composition being free from other hydrophilizing groups or components such that the base neutralized carboxyl groups are solely responsible for allowing the system to be dispersed in water.

2.   A composition as claimed in claim 1, wherein the amount of base present is such as to be capable of neutralising between 0.035 and 0.15 moles of carboxy groups per kilogram of polyol.

3.   A composition as claimed in claim 2, wherein the amount of base present is such as to be capable of neutralising between from 0.06 and 0.09 moles of carboxy groups per kilogram of polyol.

4.   A composition as claimed in any one of the preceding claims, wherein the carboxyl groups are derived from (meth) acrylic acid and/or 3-mercaptopropionic acid.

5.   A composition as claimed in any one of the preceding claims, wherein the carboxyl groups are present at a level sufficient to give the acrylic polyol a carboxyl group content of 0.035 to 1.0mol/kg.

6.   A composition as claimed in claim 5, wherein the carboxyl groups are present at a level sufficient to give the acrylic polyol a carboxyl group content of 0.035 to 0.20 mol/kg.

7.   A composition as claimed in claim 3, wherein the carboxyl groups are present at a level sufficient to give the acrylic polyol a carboxyl group content of 0.06 to 0.09 mol/kg.

8. A composition as claimed in any one of the preceding claims, wherein the polyisocyanate is the isocyanate trimer of hexamethylene diisocyanate and/or the reaction product of trimethylol propane and 4,4'-diphenylmethane diisocyanate.

9. A composition as claimed in any one of the preceding claims, wherein the polyisocyanate is used in an amount such that the ratio of isocyanate groups to the number of hydroxy groups is in the range of 0.8 to 2.

10. A composition as claimed in any one of the preceding claims, wherein the acrylic polyol has a hydroxyl value of 5 to 500 mgKOH/g of polymer.

11. A composition as claimed in claim 10, wherein the acrylic polyol has a hydroxyl value of 50 to 250mgKOH/g of polymer.

12. A composition as claimed in any one of the preceding claims, wherein the acrylic polyol has a number average molecular weight as measured by gel permeation chromatography of 700 to 10 000.

13. A composition as claimed in claim 12, wherein the acrylic polyol has a number average molecular weight as measured by gel germeation chromatography of 1000 to 6000.

14. A composition as claimed in claim 13 wherein the acrylic polyol has a number average molecular weight as measured by gel germeation chromatography of 1500 to 5000.

15. A composition as claimed in any one of the preceding claims, wherein the acrylic polyol has a theoretical glass transition temperature (Fox Tg) of -30 to 100 °C.

16. A composition as claimed in claim 15, wherein the acrylic polyol has a theoretical glass transition temperature of -10 to 70°C.

17. A composition as claimed in any one of the preceding claims, wherein the base is ammonia or an amine or mixtures thereof.

18. A composition as claimed in any one of the preceding claims, wherein the third component contains at least 60% by weight water.

19. A composition as claimed in any one of the preceding claims, which also includes one or more of the following:-

   (i) catalysts for the isocyanate-hydroxyl reaction,
   (ii) reactive diluents,
   (iii) pigments,
   (iv) fillers,
   (v) UV absorbers,
   (vi) rheology control agents, and
   (vii) flow aids.

20. A composition as claimed in any one of the preceding claims, which also comprises one or more additional polymers.

21. A composition as claimed in claim 20, wherein the additional polymers are selected from polyester polyols and polyurethane polyols.

22. A composition as claimed in claim 20 or 21 wherein any additional polymers have a carboxyl group content of 0.035 to 2.0 mol/kg.

23. A composition as claimed in any one of the preceding claims, wherein the polymeric components of the composition, excluding any crosslinkers, are made up of at least 60% by weight of acrylic polyol having a carboxyl group content of 0.035 to 0.02 mol/kg.

24. A process for coating a substrate which comprises the steps of applying a layer of a coating composition as claimed in any one of the preceding claims, to a surface of the substrate and thereafter causing or allowing the layer to cure.

25. A process as claimed in claim 24, in which the coating is a vehicle refinish primer or topcoat.

26. A method of preparing a coating composition as claimed in any one of claims 1 to 23, which comprises mixing the first component, second component and third component shortly before application.

27. A method as claimed in claim 26, wherein the first component is mixed with the second component, creating a homogeneous solution of polyol and polyisocyanate, before mixing with the third component to create an aqueous dispersion.

28. A coated article obtainable by a process as claimed in claim 24 or 25.

**Patentansprüche**

1. Eine dreikomponentige Beschichtungszusammensetzung, enthaltend:

   (i) eine erste Komponente, die wenigstens ein Acrylpolyol mit einem Carboxylgruppengehalt von 0,035 bis 2,0 mol/kg enthält, wobei dieses Acrylpolyol in einem flüchtigen organischen Lösungsmittel gelöst ist,
   (ii) eine zweite Komponente, die ein Polyisocyanat enthält, und
   (iii) eine dritte Komponente, die Wasser enthält,

   wobei wenigstens eine dieser Komponenten ebenfalls eine Base enthält,
   wobei die Base in einer Menge vorhanden ist, die geeignet ist, um 0,035 bis 0,2 mol Carboxylgruppen/kg Polyol zu neutralisieren, und die Zusammensetzung frei von anderen hydrophilierenden Gruppen oder Komponenten ist, so dass die baseneutralisierten Carboxylgruppen allein dafür verantwortlich sind, dass das System in Wasser dispergiert werden kann.

2. Zusammensetzung wie in Anspruch 1 beansprucht, wobei die Menge der vorhandenen Base so ist, dass sie dazu geeignet ist, zwischen 0,035 und 0,15 mol Carboxylgruppen/kg Polyol zu neutralisieren.

3. Zusammensetzung wie in Anspruch 2 beansprucht, wobei die Menge der vorhandenen Base so ist, dass sie dazu geeignet ist, zwischen 0,06 und 0,09 mol Carboxylgruppen/kg Polyol zu neutralisieren.

4. Zusammensetzung wie in einem der vorstehenden Ansprüche beansprucht, wobei die Carboxylgruppen sich von (Meth)acrylsäure und/oder 3-Mercaptopropionsäure ableiten.

5. Zusammensetzung wie in einem der vorstehenden Ansprüche beansprucht, wobei die Carboxylgruppen in einer Menge vorhanden sind, die ausreicht, um dem Acrylpolyol einen Carboxylgruppengehalt von 0,035 bis 1,0 mol/kg zu verleihen.

6. Zusammensetzung wie in Anspruch 5 beansprucht, wobei die Carboxylgruppen in einer Menge vorhanden sind, die ausreicht, um dem Acrylpolyol einen Carboxylgruppengehalt von 0,035 bis 0,20 mol/kg zu verleihen.

7. Zusammensetzung wie in Anspruch 3 beansprucht, wobei die Carboxylgruppen in einer Menge vorhanden sind, die ausreicht, um dem Acrylpolyol einen Carboxylgruppengehalt von 0,06 bis 0,09 mol/kg zu verleihen.

8. Zusammensetzung wie in einem der vorstehenden Ansprüche beansprucht, wobei das Polyisocyanat das Isocyanattrimer von Hexamethylendiisocyanat und/oder das Reaktionsprodukt von Trimethylolpropan und 4,4'-Diphenylmethandiisocyanat ist.

9. Zusammensetzung wie in einem der vorstehenden Ansprüche beansprucht, wobei das Polyisocyanat in einer Menge verwendet wird, so dass das Verhältnis von Isocyanatgruppen zu der Zahl von Hydroxylgruppen im Bereich von 0,8 bis 2 liegt.

10. Zusammensetzung wie in einem der vorstehenden Ansprüche beansprucht, wobei das Acrylpolyol eine Hydroxylzahl von 5 bis 500 mg KOH/g Polymer aufweist.

11. Zusammensetzung wie in Anspruch 10 beansprucht, wobei das Acrylpolyol eine Hydroxylzahl von 50 bis 250 mg KOH/g Polymer aufweist.

**12.** Zusammensetzung wie in einem der vorstehenden Ansprüche beansprucht, wobei das Acrylpolyol ein zahlenmittleres Mekulargewicht, gemessen durch Gelpermeationschromatographie, von 700 bis 10.000 aufweist.

**13.** Zusammensetzung wie in Anspruch 12 beansprucht, wobei das Acrylpolyol ein zahlenmittleres Mekulargewicht, gemessen durch Gelpermeationschromatographie, von 1.000 bis 6.000 aufweist.

**14.** Zusammensetzung wie in Anspruch 13 beansprucht, wobei das Acrylpolyol ein zahlenmittleres Mekulargewicht, gemessen durch Gelpermeationschromatographie, von 1.500 bis 5.000 aufweist.

**15.** Zusammensetzung wie in einem der vorstehenden Ansprüche beansprucht, wobei das Acrylpolyol eine theoretische Glasübergangstemperatur (Fox Tg) von -30 bis 100°C aufweist.

**16.** Zusammensetzung wie in Anspruch 15 beansprucht, wobei das Acrylpolyol eine theoretische Glasübergangstemperatur von -10 bis 70°C aufweist.

**17.** Zusammensetzung wie in einem der vorstehenden Ansprüche beansprucht, wobei die Base Ammoniak oder ein Amin oder Mischungen davon ist.

**18.** Zusammensetzung wie in einem der vorstehenden Ansprüche beansprucht, wobei die dritte Komponente wenigstens 60 Gew.-% Wasser enthält.

**19.** Zusammensetzung wie in einem der vorstehenden Ansprüche beansprucht, die zusätzlich eines oder mehrere der Folgenden enthält:

(i) Katalysatoren für die Isocyanat-Hydroxyl-Reaktion,
(ii) Reaktivverdünner,
(iii) Pigmente,
(iv) Füllstoffe,
(v) UV-Absorptionsmittel,
(vi) Rheologiekontrollmittel und
(vii) Flussmittel.

**20.** Zusammensetzung wie in einem der vorstehenden Ansprüche beansprucht, die ebenfalls ein oder mehrere zusätzliche Polymere enthält.

**21.** Zusammensetzung wie in Anspruch 20 beansprucht, wobei die zusätzlichen Polymere ausgewählt sind aus Poylesterpolyolen und Polyurethanpolyolen.

**22.** Zusammensetzung wie in Anspruch 20 oder 21 beansprucht, wobei jegliche zusätzliche Polymere einen Carboxylgruppengehalt von 0,035 bis 2,0 mol/kg haben.

**23.** Zusammensetzung wie in einem der vorstehenden Ansprüche beansprucht, wobei die polymeren Komponenten der Zusammensetzung, jegliche Vernetzungsmittel ausgeschlossen, aus wenigstens 60 Gew.-% Acrylpolyol mit einem Carboxylgruppengehalt von 0,035 bis 0,02 mol/kg bestehen.

**24.** Verfahren zur Beschichtung eines Substrats, welches die Schritte des Aufbringens einer Schicht aus einer Beschichtungszusammensetzung wie in einem der vorstehenden Ansprüche beansprucht auf eine Oberfläche des Substrats und danach Härtenlassen der Schicht oder Bewirken der Härtung der Schicht umfasst.

**25.** Verfahren wie in Anspruch 24 beansprucht, wobei die Beschichtung ein Fahrzeugreparaturprimer oder Decklack ist.

**26.** Verfahren zur Herstellung einer Beschichtungszusammensetzung wie in einem der Ansprüche 1 bis 23 beansprucht, welches Mischen der ersten Komponente, der zweiten Komponente und der dritten Komponente kurz vor dem Aufbringen umfasst.

**27.** Verfahren wie in Anspruch 26 beansprucht, wobei die erste Komponente mit der zweiten Komponente vermischt wird, um eine homogene Lösung von Polyol und Polyisocyanat zu erzeugen, vor dem Mischen mit der dritten Komponente, um eine wässrige Dispersion zu erzeugen.

28. Beschichteter Gegenstand, erhältlich nach einem Verfahren wie in Anspruch 24 oder 25 beansprucht.

**Revendications**

1. Composition de revêtement à trois composants comprenant

   (i) un premier composant contenant au moins un polyol acrylique ayant une teneur en groupe carboxyle de 0,035 à 2,0 moles/kg, ledit polyol acrylique étant dissous dans un solvant organique volatil,
   (ii) un deuxième composant contenant un polyisocyanate, et
   (iii) un troisième composant contenant de l'eau, au moins un desdits composants comprenant également une base, la base étant présente en une quantité capable de neutraliser 0,035 à 0,2 mole de groupes carboxyle par kilogramme de polyol,

   la composition étant exempte d'autres groupes ou composants d'hydrophilisation, de sorte que les groupes carboxyle neutralisés par la base sont les seuls permettant au système de se disperser dans l'eau.

2. Composition selon la revendication 1, dans laquelle la quantité de base présente est capable de neutraliser entre 0,035 et 0,15 mole de groupes carboxy par kilogramme de polyol.

3. Composition selon la revendication 2, dans laquelle la quantité de base présente est capable de neutraliser entre 0,06 et 0,09 mole de groupes carboxy par kilogramme de polyol.

4. Composition selon l'une quelconque des revendications précédentes, dans laquelle les groupes carboxyle dérivent de l'acide (méth)acrylique et/ou de l'acide 3-mercaptopropionique.

5. Composition selon l'une quelconque des revendications précédentes, dans laquelle les groupes carboxyle sont présents à un taux suffisant pour donner au polyol acrylique une teneur en groupe carboxyle de 0,035 à 1,0 mole/kg.

6. Composition selon la revendication 5, dans laquelle les groupes carboxyle sont présents à un taux suffisant pour donner au polyol acrylique une teneur en groupe carboxyle de 0,035 à 0,20 mole/kg.

7. Composition selon la revendication 3, dans laquelle les groupes carboxyle sont présents à un taux suffisant pour donner au polyol acrylique une teneur en groupe carboxyle de 0,06 à 0,09 mole/kg.

8. Composition selon l'une quelconque des revendications précédentes, dans laquelle le polyisocyanate est le trimère d'isocyanate du diisocyanate d'hexaméthylène et/ou le produit de la réaction entre le triméthylolpropane et le diisocyanate de 4,4'-diphénylméthane.

9. Composition selon l'une quelconque des revendications précédentes, dans laquelle le polyisocyanate est utilisé en une quantité telle que le rapport entre les groupes isocyanate et le nombre de groupes hydroxyle est dans la plage de 0,8 à 2.

10. Composition selon l'une quelconque des revendications précédentes, dans laquelle le polyol acrylique possède un indice d'hydroxyle de 5 à 500 mgKOH/g de polymère.

11. Composition selon la revendication 10, dans laquelle le polyol acrylique possède un indice d'hydroxyle de 50 à 250 mgKOH/g de polymère.

12. Composition selon l'une quelconque des revendications précédentes, dans laquelle le polyol acrylique possède un poids moléculaire moyen en nombre mesuré par chromatographie par perméation sur gel de 700 à 10 000.

13. Composition selon la revendication 12, dans laquelle le polyol acrylique possède un poids moléculaire moyen en nombre mesuré par chromatographie par perméation sur gel de 1000 à 6000.

**14.** Composition selon la revendication 13, dans laquelle le polyol acrylique possède un poids moléculaire moyen en nombre mesuré par chromatographie par perméation sur gel de 1500 à 5000.

**15.** Composition selon l'une quelconque des revendications précédentes, dans laquelle le polyol acrylique possède une température de transition vitreuse théorique (Fox Tg) de -30 °C à 100 °C.

**16.** Composition selon la revendication 15, dans laquelle le polyol acrylique possède une température de transition vitreuse théorique de -10 °C à 70 °C.

**17.** Composition selon l'une quelconque des revendications précédentes, dans laquelle la base est l'ammoniac ou une amine ou les mélanges de ceux-ci.

**18.** Composition selon l'une quelconque des revendications précédentes, dans laquelle le troisième composant contient au moins 60 % en poids d'eau.

**19.** Composition selon l'une quelconque des revendications précédentes, comprenant également un ou plusieurs des composants suivantes :

  (i) des catalyseurs pour la réaction isocyanate-hydroxyle,
  (ii) des diluants réactifs,
  (iii) des pigments,
  (iv) des matières de charge,
  (v) des agents absorbant les UV,
  (vi) des agents contrôlant la rhéologie, et
  (vii) des agents d'aide à l'écoulement.

**20.** Composition selon l'une quelconque des revendications précédentes, comprenant également un ou plusieurs polymères supplémentaires.

**21.** Composition selon la revendication 20, dans laquelle les polymères supplémentaires sont choisis parmi des polyesters polyols et des polyuréthanes polyols.

**22.** Composition selon la revendication 20 ou 21, dans laquelle les polymères supplémentaires, quels qu'ils soient, possèdent une teneur en groupe carboxyle qui est de 0,035 à 2,0 mole/kg.

**23.** Composition selon l'une quelconque des revendications précédentes, dans laquelle les composants polymères de la composition, à l'exception des agents de réticulation, sont constitués d'au moins 60 % en poids de polyol acrylique possédant une teneur en groupe carboxyle de 0,035 à 0,02 mole/kg.

**24.** Procédé de revêtement d'un substrat comprenant l'application d'une couche d'une composition de revêtement selon l'une quelconque des revendications précédentes sur une surface du substrat, puis l'étape consistant à provoquer ou permettre le durcissement de la couche.

**25.** Procédé selon la revendication 24, dans lequel le revêtement est un apprêt de retouche ou de finition pour véhicule.

**26.** Procédé de préparation d'une composition de revêtement selon l'une quelconque des revendications 1 à 23, comprenant le mélange du premier composant, du deuxième composant et du troisième composant peu de temps avant l'application.

**27.** Procédé selon la revendication 26, dans lequel le premier composant est mélangé avec le deuxième composant, une solution homogène de polyol et de polyisocyanate étant ainsi créée, avant le mélange avec le troisième composant pour créer une dispersion aqueuse.

**28.** Article enduit pouvant être obtenu par un procédé selon la revendication 24 ou 25.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5075370 A
- EP 557844 A

- EP 663413 A